# DEMANDE DE BREVET EUROPEEN

(11) **EP 0 533 560 A1**
(43) Date de publication de la demande: **24.03.1993**
(21) Numéro de dépôt: 92402533.1
(22) Date de dépôt: 16.09.1992
(51) Int. Cl.: B21G 1/12, B07C 5/02, B23Q 7/12

(54) **Appareillage d'orientation et de traitement d'objets allongés avec une extrémité amincie**

(30) Priorité: 17.09.1991 FR 9111430
(71) Demandeur: DASSAULT AVIATION Société anonyme dite:, F-75008 Paris (FR)
(72) Inventeur: Gairaud, Alain, F-33127 Martignas (FR)
(74) Mandataire: Colas, Jean-Pierre

(57) **Abrégé**

Appareillage pour orienter et traiter des objets ayant un corps allongé et dont une extrémité est de plus petit diamètre que le reste, par exemple des épingles d'agrafage dont l'extrémité doit être nettoyée avant ré-emploi.

Des objets (1) à orienter et traiter sont déversés dans une goulotte en forme de dièdre (10) qui peut osciller sur un pivot perpendiculaire (17), une cloison mobile, à chaque extrémité, présente une échancrure sous laquelle l'extrémité de petit diamètre d'un objet peut s'engager, ce qui déclenche le passage de l'objet dans une goulotte (20) d'où il parvient dans un poste de traitement (27, 28) avec une orientation constante, quelle que soit l'extrémité de la goulotte par laquelle il est passé.

## Description

La présente invention est relative à un appareillage d'orientation et de traitement d'objets comportant un corps allongé portant à une extrémité un premier prolongement axial de plus faible section que le corps, l'autre extrémité portant éventuellement un prolongement similaire, mais plus court.

La présente invention a été mise au point pour résoudre un problème de nettoyage d'épingles d'accostage, et le technicien comprendra qu'elle est applicable pour résoudre un grand nombre de problèmes similaires.

Une épingle d'accostage est un dispositif utilisé pour maintenir provisoirement deux pièces en appui l'une sur l'autre pendant la mise en place de moyens de fixation définitifs tels que des rivets ou des vis. Une épingle usuelle comprend un corps de forme générale cylindrique et/ou prismatique, qui porte à une extrémité un prolongement axial tubulaire, dont la partie terminale présente des fentes longitudinales. Une tige d'expansion pourvue d'une tête élargie peut coulisser à l'intérieur du prolongement tubulaire et d'un alésage du corps qui prolonge celui du prolongement, et une traction sur cette tige fait pénétrer la tête dans l'extrémité du prolongement tubulaire afin de provoquer l'expansion de la partie pourvue de fentes longitudinales. Pour l'utilisation, le prolongement tubulaire, avec la tête de la tige d'expansion sortie, est introduit dans deux trous superposés des pièces à assembler provisoirement, puis une traction sur la tige provoque l'expansion de la partie tubulaire, ce qui maintient les pièces l'une contre l'autre, en appui sur le corps. Pour récupérer l'épingle, il suffit de pousser la tige d'expansion. Le prolongement tubulaire revient par élasticité à son diamètre initial, et l'épingle peut être extraite.

Fréquemment, on dispose un produit polymérisable d'étanchéité entre les pièces à amener en contact, et, après enlèvement de l'épingle, on constate fréquemment que le prolongement tubulaire a été souillé par une petite quantité de ce produit, si bien qu'un nettoyage est nécessaire avant une nouvelle utilisation de l'épingle. Ce nettoyage consiste habituellement en un simple brossage de la surface du prolongement circulaire, et éventuellement de la tête de la tige d'expansion. Si on opère manuellement, il est facile de prendre l'épingle et d'amener son prolongement tubulaire devant des brosses rotatives. Cependant, si on désire automatiser ce travail fastidieux, il est nécessaire de disposer d'un appareillage approprié, qui soit notamment capable d'orienter convenablement les épingles, qui, après utilisation, on été recueillies en vrac dans un bac.

La présente invention a pour but de fournir un tel appareillage, qui soit simple et peu coûteux, et d'un fonctionnement sûr.

Pour obtenir ce résultat, l'invention fournit un appareil du type indiqué au début, et qui comprend :
- un appareil préhenseur, capable de saisir un à un des objets à traiter se trouvant dans un bac et de l'abandonner en dehors du bac,
- un moyen de reconnaissance d'orientation, comprenant un dièdre rigide, ouvert vers le haut et terminé à ses deux extrémités par une cloison amovible qui laisse un orifice dans lequel peut s'engager ledit premier prolongement axial d'un objet à traiter, cet orifice étant de section telle que le corps de l'objet ne peut s'y engager, ledit dièdre étant disposé de façon à recevoir un objet à traiter abandonné par l'appareil préhenseur, et étant pourvu de moyens pour lui imprimer un mouvement oscillant dans lequel son arête s'incline alternativement du côté de l'une ou l'autre de ses extrémités, et des moyens pour déplacer chaque cloison amovible en réponse à un signal d'ouverture,
- des moyens de détection aptes à détecter la présence dans le dièdre d'un objet à traiter avec son premier prolongement de faible section engagé dans l'orifice, et à émettre en réponse ledit signal d'ouverture,
- deux moyens d'acheminement aptes à transférer avec une orientation choisie un objet provenant de l'une ou l'autre des extrémités du dièdre pour l'amener à un réceptacle qui maintient l'objet dans une orientation indépendante de son trajet dans le dièdre,
- des moyens de transfert pour amener l'objet ainsi orienté à un poste de traitement,
- et un poste de traitement où des parties différentes de l'objet subissent un traitement différent.

De préférence, les moyens d'acheminement comprennent chacun une goulotte dont la partie supérieure se trouve à faible distance d'une extrémité du dièdre lorsque l'arête de celui-ci est inclinée en descendant vers cette extrémité, la partie inférieure de la goulotte débouchant au-dessus d'une surface réceptrice en forme de cône ou pyramide pointe en bas.

Dans ce cas, avantageusement, ladite surface réceptrice présente à sa partie inférieure un orifice par lequel peut passer un objet à traiter, pour être reçu dans un moyen de transfert qui maintient ledit objet dans une position verticale.

L'invention va maintenant être décrite de façon plus détaillée à l'aide d'un exemple pratique, illustré avec les dessins parmi lesquels :
Figure 1 est un schéma de principe de l'ensemble du système, et
Figure 2 est une vue de côté du moyen de reconnaissance d'orientation, prise selon la flèche II de la figure 1.

L'appareillage décrit aux figures est destiné au traitement d'épingles d'accostage en acier. Il est possible, moyennant peu de modifications, de l'appliquer à d'autres traitements, opérés sur d'autres objets, métalliques ou non, du type indiqué en préambule.

L'appareillage décrit comprend trois sous-ensembles :
A - Un sous-ensemble de prélèvement,
B - Un sous-ensemble d'orientation,
C - Un sous-ensemble de transfert et traitement.

On va décrire successivement chacun de ces sous-ensembles.

Le sous-ensemble de prélèvement A est conçu pour prélever une à une des épingles 1, contenues en vrac dans un bac 2, pour les amener au sous-ensemble B d'orientation. Le bac 2 est porté par un plateau horizontal 3, tournant autour d'un axe vertical, et entraîné par un moteur 4. Un électroaimant 5, placé au-dessus du bac 2, est porté par la tige de piston d'un vérin vertical 6, et peut se déplacer entre un niveau inférieur situé un peu au-dessus du fond du bac 2, et un niveau supérieur situé plus haut que les bord de ce même bac. Un ensemble photocapteur 7 est disposé de part et d'autre de la tige-piston du vérin 6, un peu au-dessous de la position supérieure de l'électro-aimant 5. Ce photocapteur apte à détecter si une épingle est maintenue par attraction magnétique sous l'électro-aimant 5. Le vérin 6, ainsi que le photocapteur 7, est porté par un bras pivotant 8, qui peut être entraîné en rotation autour d'un axe vertical par un moteur 9, qui est du type pas-à-pas.

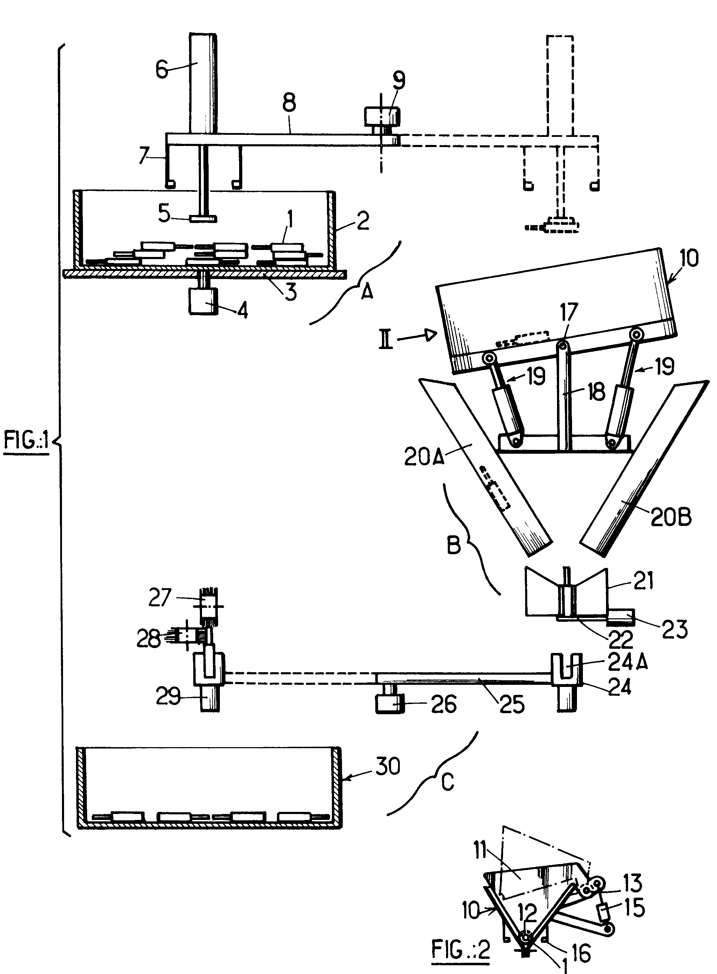

Le fonctionnement est le suivant : le bac 2 ayant été placé sur les plateaux tournants 3, le moteur pas-à-pas 9 amène l'électro-aimant au-dessus de l'intérieur du bac, à proximité d'un de ses bords, en position supérieure. Le vérin 6 fait descendre l'électro-aimant jusqu'à sa position inférieure, puis le fait remonter. Si le photocapteur détecte la présence d'une épingle au contact de l'électroaimant 5, le moteur 9 fait tourner le bras 8 d'un angle qui est voisin de 180°, pour l'amener au-dessus du sous-ensemble d'orientation B dans la position représentée en trait interrompu sur la figure 1. Si le photocapteur 7 ne détecte pas d'épingle, le moteur 4 entraîne en rotation le plateau tournant 3 d'un angle fixé à l'avance, et/ou le moteur 9 fait tourner le bras 8 d'un autre angle, également choisi à l'avance. Le vérin 6 est alors actionné pour descendre l'électroaimant à l'intérieur du bac, et le processus est répété jusqu'à ce qu'une épingle ait été détectée par le photocapteur 7, le bras 8 est alors tourné pour amener cette épingle au-dessus du sous-ensemble B. Les angles unitaires de rotation du plateau tournant 3 et du bras 8 sont choisis pour qu'à la fin toute la surface du fond du bac 2 ait été balayée et qu'on ait la certitude qu'aucune épingle n'est restée sur celui-ci.

L'électroaimant 5 peut être remplacé par d'autres moyens de capture, par exemple une ventouse dans le cas où les objets à prélever ne sont pas sensibles au champ magnétique.

Le sous-ensemble A qui vient d'être décrit présente des avantages de grande simplicité et de faible coût. Il peut cependant être remplacé par d'autres appareillages remplissant les mêmes fonctions, comme par exemple un système à goulottes, vibrantes ou non, au-dessus desquelles est basculé le bac 2, et qui est pourvu d'un système de vannes pour délivrer un-à-un les objets dans le sous-ensemble B d'orientation qu'on va maintenant décrire.

Les épingles prélevées par les sous-ensembles de prélèvement A, quand elles sont libérées par désactivation de l'électroaimant 5, tombent dans une goulotte 10, en forme de dièdre, qui est fermée à ses deux extrémités par des cloisons mobiles transversales 11, dont la forme est donnée à la figure 2. Ces cloisons ont une forme triangulaire, épousant la forme du dièdre de la gouttière 10, mais avec une échancrure 12 qui, en position de fermeture, se trouve au voisinage du fond de la gouttière, et dont les dimensions et la forme sont calculées pour s'opposer au passage du corps d'une épingle, mais pour laisser passer la partie d'extrémité tubulaire, plus mince, d'une épingle, lorsque celle-ci glisse le long du fond du dièdre.

Chaque cloison mobile 11 est montée sur un pivot 13 parallèle à l'arête dudit dièdre, et peut basculer autour de ce pivot grâce à un vérin 15, fixe, comme le pivot 13, par rapport à la gouttière 10. Un photodétecteur 16 est disposé à proximité de chacune des extrémités de la gouttière 10, au-delà de la cloison mobile 11, et est apte à détecter si un prolongement tubulaire d'une épingle est engagé dans le passage défini par l'échancrure 12 de la cloison mobile 11 et le fond du dièdre. Le photodétecteur 16 peut être remplacé par tout autre détecteur approprié, électrique, magnétique, à air comprimé etc..

La gouttière 10 est articulée, grâce à un pivot 17 perpendiculaire à l'arête du dièdre, sur un support fixe 18. Deux vérins 19, qui peuvent être remplacés par un vérin unique à double effet, permettent de faire basculer la gouttière 10 dans deux directions, et de lui faire prendre des inclinaisons suffisantes pour que les épingles qui y sont déversées puissent glisser jusqu'à atteindre alternativement l'une et l'autre des deux cloisons transversales 11.

Deux goulottes identiques 20A, 20B sont prévues, chacune faisant face à une des extrémités de la gouttière 10. Leur rôle est le suivant : supposons la goulotte inclinée vers la goulotte 2A. Si le photocapteur 16 a détecté la présence d'une épingle contre la paroi mobile 11 correspondante, avec son extrémité tubulaire engagée sous l'échancrure 12, le volet 11 se relève, et l'épingle vient tomber dans une goulotte 20A ou 20B, où elle glisse, corps en avant, vers un bol 21, où elle est maintenue avec son prolongement tubulaire dirigé vers le haut.

Si le photocapteur 16 n'a pas détecté d'extrémité tubulaire engagée sous l'ouverture 12, les vérins 19 inversent l'inclinaison de la gouttière 10, et l'épingle tombe dans la goulotte opposée 20B, de telle manière qu'elle parvient encore dans le bol 21 avec son corps en avant.

Le bol 21 est en forme d'entonnoir, avec une partie supérieure tronconique, évasée vers le haut, et une partie inférieure cylindrique, de diamètre un peu supérieur à celui du corps d'une épingle. Il comporte un fond mobile 22 relié à un vérin 23. La rétraction de ce vérin permet à l'épingle contenue dans le bol de tomber pour atteindre le sous-ensemble C de transfert et traitement qu'on va maintenant décrire.

Un support 24 se trouve, au moment convenable, au-dessous du bol 21, de façon à recevoir l'épingle délivrée par le retrait du fond mobile 22. Ce support 24 présente une cavité 24A, ouverte vers le haut, et de forme adaptée à recevoir le corps d'une épingle, et à le maintenir orienté verticalement, tout en s'opposant à sa rotation pendant le brossage qui va suivre. Pour cela, il peut être pourvu de moyens élastiques freinant une rotation éventuelle de l'épingle sur son axe. Si le corps de l'épingle présente une forme prismatique, il suffit que la cavité 24A ait une forme correspondante. Le support 24 est porté par un bras rotatif 25, qui peut tourner autour d'un axe vertical sous l'action d'un moteur 26.

Une rotation d'environ 180° du bras 25 autour de l'axe vertical amène l'épingle au poste de traitement, où deux brosses rotatives 27, 28 nettoient les parties souillées de l'épingle. La brosse 28, outre son mouvement de rotation selon son axe pour le nettoyage, est animée d'un mouvement de rotation lent selon l'axe de l'épingle : après une rotation complète, toute la surface à nettoyer de l'épingle a été ainsi balayée. Quand cette opération est terminée, un vérin 29, situé sous le support 24, éjecte l'épingle nettoyée de son logement, pour la faire tomber dans un bac 30. On observera que les épingles propres tombent en vrac dans le bac 30, si bien que le bénéfice de leur orientation est perdu. Cela n'a pas d'importance, dans la mesure où les épingles d'agrafage sont mises en place manuellement. Au cas où elles seraient mises en place par un robot, il serait facile de prévoir que le support 24, après le traitement, passe dans un poste d'extraction, où les épingles, extraites du support 24, sont rangées avec une orientation constante à l'intérieur d'un magasin d'alimentation du robot.

Dans tout ce qui a été dit, l'épingle a été assimilée à un objet composé d'un corps cylindrique ou prismatique, de section constante, avec d'un seul côté un prolongement axial de plus petite section. Dans la pratique, certains modèles d'épingles comportent, du côté opposé à ce prolongement de petite section, un autre prolongement, également de faible section, mais de longueur plus faible, qui est l'extrémité de la tige d'expansion. Le fonctionnement est cependant exactement le même, à condition que le photocapteur 16 soit capable de faire la distinction entre le prolongement de grande longueur et l'autre. Ceci peut être obtenu très simplement en fixant la position de la paroi mobile 11 le long de l'arête du dièdre 10 de telle façon que le prolongement de petite longueur soit masqué au photocapteur par l'extrémité de la gouttière, le photocapteur détectant cependant la présence de l'autre prolongement.

## Revendications

1. Appareillage d'orientation et de traitement d'objets comportant un corps allongé portant à une extrémité un premier prolongement axial de plus faible section que le corps, l'autre extrémité portant éventuellement un second prolongement similaire, mais plus court,
caractérisé en ce qu'il comprend :
- un appareil préhenseur (5 à 9), capable de saisir un à un des objets à traiter se trouvant dans un bac et de l'abandonner en dehors du bac,
- un moyen de reconnaissance d'orientation, comprenant un dièdre rigide (10), ouvert vers le haut et terminé à ses deux extrémités par une cloison amovible (11) qui laisse un orifice dans lequel peut s'engager ledit premier prolongement axial d'un objet à traiter, cet orifice étant de section telle que le corps de l'objet ne peut s'y engager, ledit dièdre étant disposé de façon à recevoir un objet à traiter abandonné par l'appareil préhenseur, et étant pourvu de moyens (19) pour lui imprimer un mouvement oscillant dans lequel son arête s'incline alternativement du côté de l'une ou l'autre de ses extrémités, et des moyens pour déplacer chaque cloison amovible en réponse à un signal d'ouverture,
- des moyens de détection ( 16 ) aptes à détecter la présence dans le dièdre d'un objet à traiter avec son premier prolongement engagé dans l'orifice, et à émettre en réponse un signal d'ouverture,
- des moyens d'acheminement (20, 21) aptes à transférer avec une orientation choisie un objet provenant de l'une ou l'autre des extrémités du dièdre pour l'amener à un réceptacle qui maintient l'objet dans une orientation indépendante de son trajet dans le dièdre,,
- des moyens de transfert (24, 25) pour amener l'objet ainsi orienté à un poste de traitement,
- et un poste de traitement (27, 28) où des parties différentes de l'objet subissent un traitement différent.

2. Appareillage selon la revendication 1, caractérisé en ce que les moyens d'acheminement comprennent deux goulottes essentiellement identiques (20) dont la partie supérieure se trouve à faible distance de l'une ou l'autre des extrémités du dièdre lorsque l'arête de celui-ci est inclinée en descendant vers cette extrémité, la partie inférieure de la goulotte débouchant au-dessus d'une surface réceptrice (21) en forme de cône ou pyramide pointe en bas.

3. Appareillage selon la revendication 2, caractérisé en ce que ladite surface réceptrice présente à sa partie inférieure un orifice par lequel peut passer un objet à traiter, pour être reçu dans un moyen de transfert (24) qui maintient ledit objet dans une position verticale.

4. Appareillage selon l'une des revendications 1 à 3, dans lequel les objets à traiter sont des épingles d'agrafage ayant déjà été utilisées, caractérisé en ce que le poste de traitement comporte des brosses (27, 28) aptes à nettoyer la partie de faible section de l'épingle, pour en enlever des restes de produit d'étanchéité.
